# EUROPÄISCHE PATENTANMELDUNG

(11) **EP 4 289 266 A1**
(43) Veröffentlichungstag der Anmeldung: **13.12.2023**
(21) Anmeldenummer: 23178642.7
(22) Anmeldetag: 12.06.2023
(51) Int. Cl.: A01M 17/00, A01B 39/10, A01B 49/06

(54) **VORRICHTUNG ZUR MECHANISCHEN BEKÄMPFUNG VON IM BODEN LEBENDEN SCHÄDLINGEN**

(30) Priorität: 10.06.2022 DE 102022114708; 10.06.2022 DE 202022103291 U
(71) Anmelder: Zitzelsberger, Alois, 94089 Neureichenau (DE)
(72) Erfinder: Zitzelsberger, Alois, 94089 Neureichenau (DE)
(74) Vertreter: advotec.

(57) **Zusammenfassung**

Die Erfindung betrifft eine Vorrichtung (1) zur mechanischen Bekämpfung von im Boden (2) lebenden Schädlingen, insbesondere von Maikäfer-Engerlingen, umfassend mindestens eine, mittels eines Antriebsmotors (5) auf und ab bewegbare, einen Druck auf den zu bearbeitenden Boden (2) ausübende Vibrationsplatte (3), wobei die Vibrationsplatte (3) auf ihrer, dem Boden (2) zugewandten Seite (15) eine Mehrzahl von Penetrierelementen (4) zum Eindringen in den zu bearbeitenden Boden (2) und Abtöten der darin lebenden Schädlinge aufweist.

## Beschreibung

Die vorliegende Erfindung betrifft eine Vorrichtung zur mechanischen Bekämpfung von im Boden lebenden Schädlingen, insbesondere von Maikäfern-Engerlingen.

Maikäfer-Engerlinge fressen die Wurzeln von Gräsern, die dann absterben und braun werden. Einige Gebiete, wie beispielsweise der Bayerische Wald, sind deutlich über der Schadschwelle von 40 Engerlingen pro Quadratmeter befallen. Durch das Abfressen von Wurzeln durch die Engerlinge hat die Grasnabe keinen Halt mehr zum Erdreich, wodurch sie insbesondere in Hanglagen, vor allem bei Belastung oder einem plötzlichen Wolkenbruch, abrutscht.

Die Bekämpfung von Maikäfern-Engerlingen ist grundsätzlich schwierig, da die unterirdisch lebenden Engerlinge von Fressfeinden nicht gesehen werden und sich chemisch-synthetische Präparate im Versuch als ungeeignet herausgestellt haben. Zudem ist der Einsatz von Pestiziden sehr umstritten, da auch andere, im Boden lebende Tiere dadurch beeinträchtigt werden.

Der vorliegenden Erfindung liegt die Aufgabe zugrunde, eine Möglichkeit zur Verfügung zu stellen, Schädlinge, insbesondere Maikäfer-Engerlinge möglichst umweltfreundlich zu bekämpfen.

Diese Aufgabe wird durch eine Vorrichtung mit den Merkmalen des Anspruchs 1 gelöst.

Die erfindungsgemäße Vorrichtung umfasst mindestens eine, mittels eines Antriebsmotors auf und ab bewegbare, einen Druck auf den zu bearbeitenden Boden ausübende Vibrationsplatte, wobei die Vibrationsplatte auf ihrer, dem Boden zugewandten Seite eine Mehrzahl von Penetrierelemente zum Eindringen in den zu bearbeitenden Boden und Abtöten der darin lebenden Schädlinge aufweist. Bei der Vibrationsplatte kann es sich beispielsweise um eine Art Rüttelplatte handeln, welche vibrierend, d. h. sich in der Regel in hoher Frequenz auf und ab bewegend, über den zu bearbeitenden Boden geführt, z. B. gezogen oder geschoben wird. Dabei werden auch die Penetrierelemente in unterschiedlicher Frequenz abwechselnd in den Boden ein- und ganz oder teilweise ausgebracht. Bei jedem Penetriervorgang werden die zu bekämpfenden Schädlinge auf bzw. im Boden mechanisch abgetötet. Durch die Wahl der entsprechenden Länge der Penetrierelemente können tiefer lebende Organismen bei der Schädlingsbekämpfung verschont werden. Neben dem Abtöten der Schädlinge bewirkt das Bearbeiten eines Bodens mit der erfindungsgemäßen Vorrichtung ein Auflockern und Belüften des Bodens ohne diesen gravierend zu beeinträchtigen.

Bei einer besonders bevorzugten Ausführungsform der erfindungsgemäßen Vorrichtung sind die Penetrierelemente Messer, welche vorzugsweise eine nach unten in Richtung Boden gerichtete Spitze aufweisen, wobei die Messer vorzugsweise dreieckig ausgebildet sind, wobei eine Seite des Dreiecks mit der Vibrationsplatte vorzugsweise einen rechten Winkel einschließt. Durch diese Form der Messer ist ein besonders wirkungsvolles Eindringen in bzw. Herausziehen aus dem Boden möglich. Zudem sind derartige Messer besonders vorteilhaft beim Einwirken auf die zu bekämpfenden Schädlinge.

Mit Vorteil weisen die Penetrierelemente eine Länge von ca. 0,5 cm bis ca. 20 cm auf. Diese Länge ist besonders vorteilhaft bei der Bekämpfung von Maikäfer-Engerlingen, da sich diese auf bzw. im Boden bis zu einer Tiefe von 20 cm aufhalten. Vorteilhafterweise können die Penetrierelemente unterschiedliche Längen aufweisen. So können beispielsweise diejenigen Penetrierelemente, welche der Abtötung der Schädlinge dienen, etwas kürzer ausgebildet sein als die übrigen, welche durch die etwas größere Länge besonders vorteilhaft bei der Bodenauflockerung sind. Ein besonders vorteilhaftes Verhältnis zwischen längeren und kürzeren Klingen liegt bei 1:3.

Die Penetrierelemente sind vorzugsweise aus Stahl, insbesondere *Hardox*^{®}-Stahl gefertigt und weisen eine Nennhärte von mindestens 500 auf. Insbesondere Penetrierelemente aus derartigem Stahl haben sich als besonders vorteilhaft bei der Bodenbearbeitung erwiesen, da diese eine hohe Zugkraft bei geringer Sprödigkeit aufweisen. Insbesondere eine Kombination aus der oben beschriebenen dreieckigen Form und der beschriebenen Materialbeschaffenheit bewirkt neben einer sehr effizienten Schädlingsbekämpfung eine sogenannte Schlitzwirkung, bei der die Rhizome von Gräsern geteilt werden, wodurch es nach dem Bearbeiten zu einem besonders vorteilhaften Pflanzenwuchs kommt.

Mit Vorteil ist die Vibrationsplatte mit einer Frequenz von ca. 50 Hz bis ca. 50.000 Hz auf und ab bewegbar. Je nach Schädlingsbefall kann die Frequenz der Vibrationsplatte eingestellt werden. Mit Vorteil wird die Vibrationsplatte mit einem Druck von bis zu 160 kN auf den zu bearbeitenden Boden gepresst. Durch den hohen Druck, welcher von der Vibrationsplatte auf den Boden ausgeübt wird, kommt es ebenfalls - bereits ohne Eindringen der Penetrierelemente in den Boden - zu einem Abtöten von Schädlingen, indem diese durch den hohen Druck platzen.

Bei einer Weiterbildung der erfindungsgemäßen Vorrichtung sind mindestens zwei, vorzugsweise drei Vibrationsplatten vorgesehen, die synchron oder auch unabhängig voneinander bewegbar sind. Durch eine Mehrzahl von Vibrationsplatten kann die erfindungsgemäße Vorrichtung ideal auf unebenes Gelände angepasst werden.

Mit Vorteil sind die mindestens eine, vorzugsweise drei Vibrationsplatten in einer Aufnahmeeinrichtung, insbesondere einem Aufnahmebock angeordnet, welche Aufnahmevorrichtung vorzugsweise an ein Zugfahrzeug, insbesondere einen Traktor oder Bagger ankoppelbar ist. Auf diese Art und Weise kann die erfindungsgemäße Vorrichtung ideal über einen großflächigen, zu bearbeitenden Boden geführt werden.

In der Regel wird die mindestens eine Vibrationsplatte von einem Hydraulikmotor angetrieben. Der Hydraulikmotor kann auch mit dem Motor eines Zugfahrzeuges zusammenwirken. Der Antriebsmotor ist üblicherweise ein Verbrennungsmotor, wie beispielsweise ein Benzin-, Diesel- oder Flüssiggasverbrennungsmotor. Der Antriebsmotor treibt normalerweise einen Schwingungs- oder Vibrationserreger an, der die Vibrationsplatte in Vibration versetzt.

Eine Weiterentwicklung der erfindungsgemäßen Vorrichtung ist mit einer Einbringvorrichtung zum Einbringen von Düngemittel, Pestiziden oder dergleichen in den vorher durch die Penetriereinrichtungen aufgeschnittenen Boden gekoppelt, wobei die Vibrationsplatte vorzugsweise Bohrungen zum Einführen von Einspeisedüsen aufweist, wobei die Bohrungen vorzugsweise jeweils hinter den Penetrierelementen angeordnet sind. So kann beispielsweise in eine Bodenöffnung, welche vorher durch ein Penetrierelement geschaffen worden ist, Düngemittel oder Pestizid eingebracht werden.

Des Weiteren kann die erfindungsgemäße Vorrichtung mit einer Vorrichtung zur Ausbringung von Saatgut gekoppelt sein.

Die vorliegende Erfindung betrifft ferner ein Verfahren zur Bekämpfung von im Boden lebenden Schädlingen, insbesondere von Maikäfer-Engerlingen, welches dadurch gekennzeichnet ist, dass eine Vorrichtung mit einer mit Penetrierelementen bestückten Vibrationsplatte, insbesondere eine Vorrichtung nach einem der Ansprüche 1 bis 10, über den zu bearbeitenden Boden geführt wird, wobei die Vibrationsplatte beim Führen der Vorrichtung über den zu bearbeitenden Boden abwechselnd auf und ab bewegt wird. Bei der Auf- und Abwärtsbewegung handelt es sich in der Regel um ein Vibrieren mit einer Frequenz von ca. 1.000 Hz bis ca. 50 KHz.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: eine schematische Darstellung einer Vorderansicht einer erfindungsgemäßen Vorrichtung;
- Fig. 2:: eine perspektivische Darstellung der Vorrichtung von Figur 1;
- Fig. 3:: eine Seitenansicht der Vorrichtung gemäß Figur 1 in einem an einen Traktor angekoppelten Zustand;
- Fig. 4:: eine Draufsicht auf die Unterseite einer Vibrationsplatte der Vorrichtung gemäß den Figuren 1 bis 3.

Nachfolgend werden gleiche oder funktionsgleiche Elemente mit den gleichen Bezugsziffern gekennzeichnet.

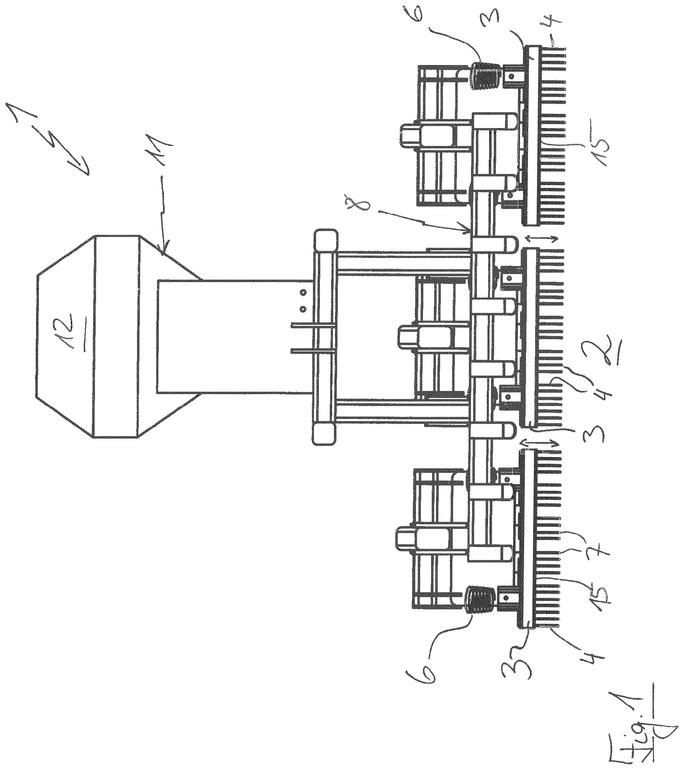

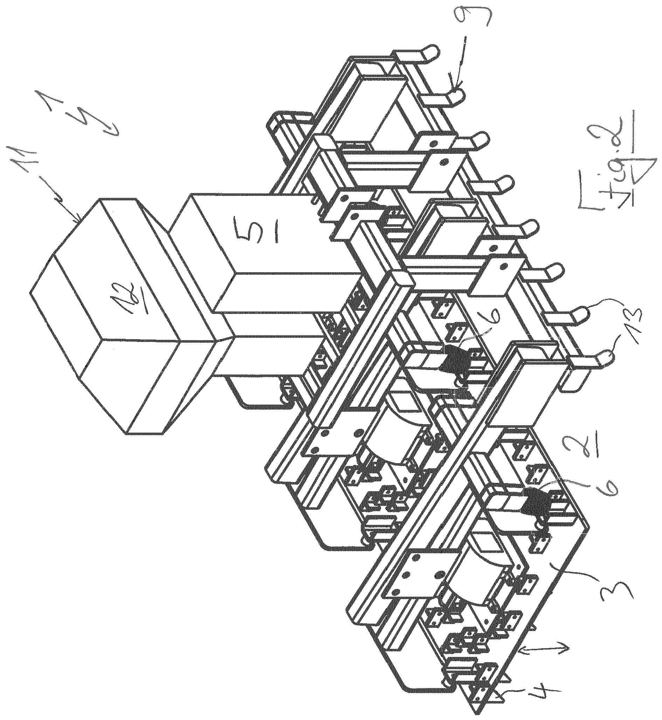

Die Figuren 1 bis 3 zeigen verschiedene Darstellungen einer erfindungsgemäßen Vorrichtung 1 zur mechanischen Bekämpfung von im Boden 2 lebenden Maikäfer-Engerlingen. Die Vorrichtung 1 umfasst drei auf und ab bewegbare, einen Druck auf den zu bearbeitenden Boden 2 ausübende Vibrationsplatten 3. Die Auf- und Abwärtsbewegungen der Vibrationsplatten ist in den Figuren mittels Pfeilen veranschaulicht. Die Vibrationsplatten 3 verweisen auf ihrer dem Boden 2 zugewandten Unterseite 15 eine Mehrzahl von Messern 4 auf. Die Vibrationsplatten 3 werden mittels eines Hydraulikmotors 5 auf und ab bewegt. Die Aufwärtsbewegungen der Vibrationsplatten 3 werden mittels Schraubenfedern 6 unterstützt. Die Messer 4 weisen eine nach unten in Richtung Boden 2 gerichtete Spitze 7 auf. Die Messer 4 sind dreieckig ausgebildet, wobei eine Seite 8 des Dreiecks mit der Vibrationsplatte 3 einen rechten Winkel einschließt.

Etwa ein Drittel der Messer 4 weist eine Länge von ca. 20 cm auf. Zwei Drittel der Messer 4 weisen eine Länge von ca. 10 cm auf. Die Messer 4 sind aus *Hardox*^{®}-Stahl gefertigt und weisen eine Nennhärte von 600 auf. Die Messer 4 weisen damit eine hohe Zugfestigkeit auf und sind trotzdem nicht spröde ausgebildet.

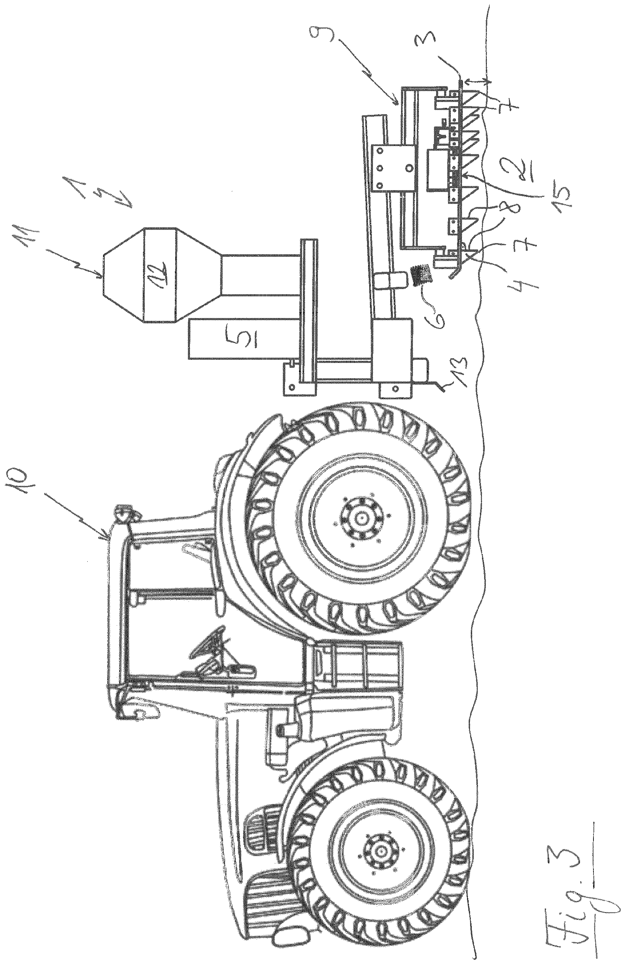

Die drei Vibrationsplatten 3 sind in einem Aufnahmebock 9 angeordnet, welcher an einem Traktor 10 angekoppelt ist. Dies ist in Figur 3 anschaulich dargestellt. Am Aufnahmebock 9 ist wiederum eine Sämaschine 11 angeordnet, welche einen Aufnahmebehälter 12 für Saatgut aufweist.

Im Arbeitseinsatz fährt nun der Traktor 10 über den zu bearbeitenden Boden 2 und zieht damit die erfindungsgemäße Vorrichtung 1 hinter sich her. Beim Fahren des Traktors 10 über den Boden 2 werden die Vibrationsplatten 3 durch den Hydraulikmotor 5 in Vibration, d. h. in schnelle Auf- und Abwärtsbewegungen versetzt. Die Vibrationsplatten 3 können beim Vibrieren eine Frequenz von 1.000 Hz bis 50 KHz erreichen. Die Frequenz ist über eine Steuerung einstellbar. Bei den Vibrationsbewegungen werden die Vibrationsplatten 3 mit einem Druck bis zu 160 kN auf den Boden 2 gepresst. Durch den Druck und die Vibrationen, die durch die Vibrationsplatten 3 ausgelöst werden, kommt es bereits zum Abtöten von Schädlingen, indem diese durch den hohen Druck und die Vibrationen platzen. Ein anderer Teil der Schädlinge wird durch die ins Erdreich eindringenden Messer 4 zerschnitten und damit abgetötet.

Vor dem Bearbeiten des Bodens 2 durch die Messer 4 kann Saatgut aus dem Aufnahmebehälter 12 durch Saatleitungen 13 ausgebracht werden, das dann durch die Messer 4 in den Boden eingearbeitet wird.

Die Vibrationsplatten 3 sind aus Edelstahl gefertigt. Jede Vibrationsplatte 3 ist mit zwei Schraubenfedern 6 gekoppelt. Jede Feder 6 hat einen Federweg von 200 mm und ist auf 5.000 N ausgelegt.

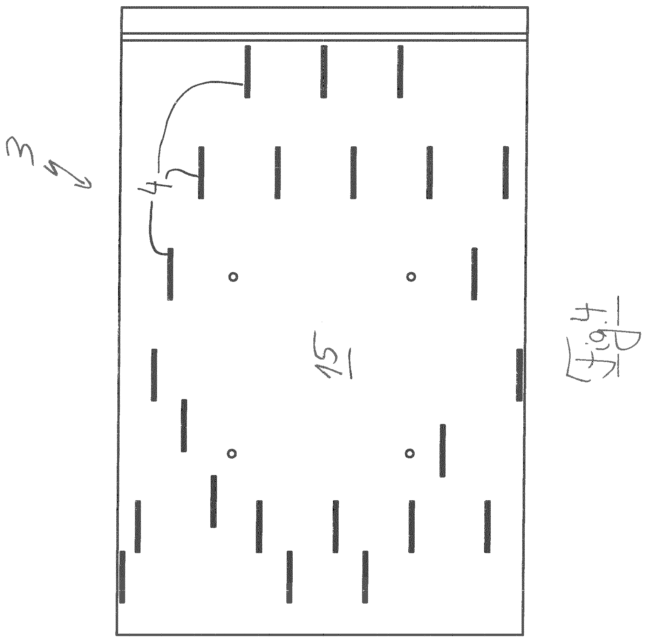

Figur 4 zeigt eine Draufsicht auf die Unterseite 15 einer Vibrationsplatte 3. An der Vibrationsplatte 3 sind insgesamt 23 Messer 4 angeordnet, welche in einem Abstand von ca. 3 cm auf der Unterseite 15 der Vibrationsplatte 3 verteilt sind.

## Patentansprüche

1. Vorrichtung (1) zur mechanischen Bekämpfung von im Boden (2) lebenden Schädlingen, insbesondere von Maikäfer-Engerlingen, umfassend mindestens eine, mittels eines Antriebsmotors (5) auf und ab bewegbare, einen Druck auf den zu bearbeitenden Boden (2) ausübende Vibrationsplatte (3), wobei die Vibrationsplatte (3) auf ihrer, dem Boden (2) zugewandten Seite (15) eine Mehrzahl von Penetrierelementen (4) zum Eindringen in den zu bearbeitenden Boden (2) und Abtöten der darin lebenden Schädlinge aufweist.

2. Vorrichtung nach Anspruch 1, **dadurch gekennzeichnet, dass** die Penetrierelemente Messer (4) sind, welche vorzugsweise eine nach unten in Richtung Boden (2) gerichtete Spitze (7) aufweisen, wobei die Messer (4) vorzugsweise dreieckig ausgebildet sind, wobei eine Seite (8) des Dreiecks mit der Vibrationsplatte (3) vorzugsweise einen rechten Winkel einschließt.

3. Vorrichtung nach einem der Ansprüche 1 oder 2, **dadurch gekennzeichnet, dass** die Penetrierelemente eine Länge von 0,5 cm bis 20 cm aufweisen, wobei die Penetrierelemente vorzugsweise unterschiedliche Längen aufweisen.

4. Vorrichtung nach einem der vorhergehenden Ansprüche, **dadurch gekennzeichnet, dass** die Penetrierelemente (4) aus Stahl, insbesondere *Hardox*^{®}-Stahl gefertigt sind und eine Nennhärte von mindestens 500 aufweisen.

5. Vorrichtung nach einem der vorhergehenden Ansprüche, **dadurch gekennzeichnet, dass** die Vibrationsplatte (3) mit einer Frequenz von ca. 50 Hz bis ca. 50 KHz auf und ab bewegbar ist.

6. Vorrichtung nach einem der vorhergehenden Ansprüche, **dadurch gekennzeichnet, dass** die Vibrationsplatte (3) mit einem Druck von bis zu 1000 kN auf den zu bearbeitenden Boden (2) gepresst wird.

7. Vorrichtung nach einem der vorhergehenden Ansprüche, **dadurch gekennzeichnet, dass** mindestens zwei, vorzugsweise drei Vibrationsplatten (3) vorgesehen sind, die synchron oder unabhängig voneinander auf und ab bewegbar sind.

8. Vorrichtung nach einem der vorhergehenden Ansprüche, **dadurch gekennzeichnet, dass** die mindestens eine, vorzugweise drei Vibrationsplatten (3) in einer Aufnahmeeinrichtung, insbesondere einem Aufnahmebock (9) angeordnet sind, welche Aufnahmevorrichtung vorzugsweise an ein Zugfahrzeug, insbesondere Traktor (10) ankoppelbar ist.

9. Vorrichtung nach einem der vorhergehenden Ansprüche, **dadurch gekennzeichnet, dass** die mindestens eine Vibrationsplatte (3) von einem Hydraulikmotor (5) angetrieben wird.

10. Vorrichtung nach einem der vorhergehenden Ansprüche, **dadurch gekennzeichnet, dass** sie mit einer Einbringvorrichtung (11) zum Einbringen von Düngemittel, Pestiziden oder dergleichen in den vorher durch die Penetrierelementen (4) aufgeschnittenen Boden gekoppelt ist, wobei die Vibrationsplatte (3) vorzugsweise Bohrungen zum Einführen von Einspeisedüsen aufweist, wobei die Bohrungen vorzugsweise jeweils hinter den Penetrierelementen (4) angeordnet sind.

11. Verfahren zur Bekämpfung von im Boden lebenden Schädlingen, insbesondere Maikäfern-Engerlingen, **dadurch gekennzeichnet, dass** eine Vorrichtung, welche mindestens eine mit Penetrierelementen bestückte Vibrationsplatte (3) aufweist, insbesondere eine Vorrichtung nach einem der Ansprüche 1 bis 10 über den zu bearbeitenden Boden (2) geführt wird, wobei die Vibrationsplatte beim Führen der Vorrichtung über den zu bearbeitenden Boden abwechselnd auf und ab bewegt wird.
